Europäisches Patentamt

European Patent Office

Office européen des brevets

(19)

(11) **EP 1 158 828 B1**

(12) **FASCICULE DE BREVET EUROPEEN**

(45) Date de publication et mention
de la délivrance du brevet:
**11.12.2002 Bulletin 2002/50**

(51) Int Cl.⁷: **H04Q 7/38**

(21) Numéro de dépôt: **01401301.5**

(22) Date de dépôt: **18.05.2001**

(54) **Procédé de controle de transfert d'un canal dans un réseau de radiocommunication cellulaire**

Verfahren zur Weiterreichungssteuerung in einem mobilen Funkkommunikationsnetzwerk

Method for controlling handover in a mobile radiocommunications network

(84) Etats contractants désignés:
**AT BE CH CY DE DK ES FI FR GB GR IE IT LI LU
MC NL PT SE TR**

(30) Priorité: **23.05.2000 FR 0006561**

(43) Date de publication de la demande:
**28.11.2001 Bulletin 2001/48**

(73) Titulaire: **Nortel Networks Limited
St. Laurent, Quebec H4S 2A9 (CA)**

(72) Inventeurs:
• **Fauconnier, Denis
78470 Saint-Remy-Les Chevreuse (FR)**

• **Mousset, Claire
Maidenhead SL6 6HA (GB)**

(74) Mandataire: **Loisel, Bertrand
Cabinet Plasseraud,
84, rue d'Amsterdam
75440 Paris Cédex 09 (FR)**

(56) Documents cités:
WO-A-92/02088          WO-A-93/25021
WO-A-98/09458          GB-A- 2 236 458

**Description**

La présente invention concerne le domaine des radiocommunications, et en particulier les techniques de chiffrement utilisées dans les réseaux cellulaires.

L'invention trouve notamment application dans les réseaux cellulaires de troisième génération du type UMTS (« Universal Mobile Telecommunication System ») utilisant des techniques d'accès multiple à répartition par codes (CDMA, « Code Division Multiple Access »).

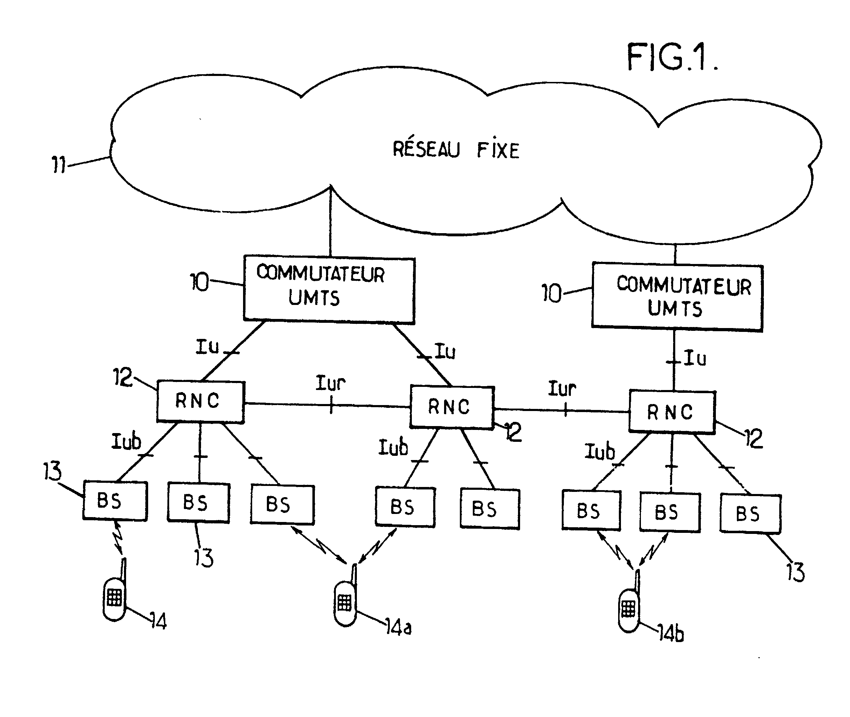

L'invention est décrite ci-après dans son application à un réseau UMTS, dont la figure 1 montre l'architecture.

Les commutateurs du service mobile 10, appartenant un coeur de réseau (CN, « Core Network »), sont reliés d'une part à un ou plusieurs réseaux fixes 11 et d'autre part, au moyen d'une interface dite *Iu,* à des équipements de contrôle 12, ou RNC (« Radio Network Controller »). Chaque RNC 12 est relié à une ou plusieurs stations de base 13 au moyen d'une interface dite *Iub*. Les stations de base 13, réparties sur le territoire de couverture du réseau, sont capables de communiquer par radio avec les terminaux mobiles 14, 14a, 14b appelés UE (« User Equipment »). Les stations de base peuvent être regroupées pour former des noeuds appelés « node B ». Certains RNC 12 peuvent en outre communiquer entre eux au moyen d'une interface dite *Iur*. Les RNC et les stations de base forment un réseau d'accès appelé UTRAN (« UMTS Terrestrial Radio Access Network »).

L'UTRAN comporte des éléments des couches 1 et 2 du modèle ISO en vue de fournir les liaisons requises sur l'interface radio (appelée *Uu),* et un étage 15A de contrôle des ressources radio (RRC, « Radio Resource Control ») appartenant à la couche 3, ainsi qu'il est décrit dans la spécification technique 3G TS 25.301, « Radio Interface Protocol », version 3.4.0 publiée en mars 2000 par le 3GPP (3$^{rd}$ Generation Partnership Project). Vu des couches supérieures, l'UTRAN agit simplement comme relais entre l'UE et le CN.

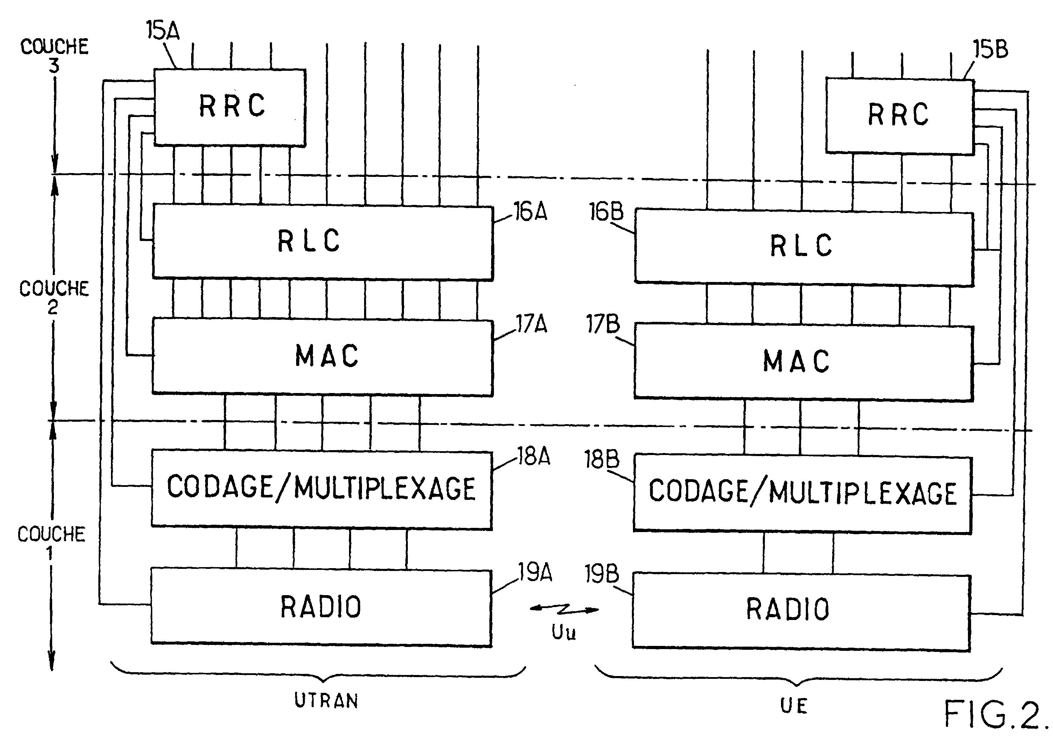

Le figure 2 montre les étages RRC 15A, 15B et les étages des couches inférieures qui appartiennent à l'UTRAN et à un UE. De chaque côté, la couche 2 est subdivisée en un étage 16A, 16B de contrôle de liaison radio (RLC, « Radio Link Control ») et un étage 17A, 17B de contrôle d'accès au médium (MAC, « Medium Access Control »). La couche 1 comprend un étage 18A, 18B de codage et de multiplexage. Un étage 19A, 19B radio assure l'émission des signaux radio à partir des trains de symboles fournis par l'étage 18A, 18B, et la réception des signaux dans l'autre sens.

Il existe différentes façons d'adapter l'architecture de protocoles selon la figure 2 à l'architecture matérielle de l'UTRAN selon la figure 1, et en général différentes organisations peuvent être adoptées selon les types de canaux (voir section 11.2 de la spécification technique 3G TS 25.401, « UTRAN Overall Description », version 3.1.0 publiée en janvier 2000 par le 3GPP). Les étages RRC, RLC et MAC se trouvent dans le RNC 12. La couche 1 se trouve par exemple dans le node B. Une partie de cette couche peut toutefois se trouver dans le RNC 12.

Lorsque plusieurs RNC sont impliqués dans une communication avec un UE, il y a généralement un RNC de desserte appelé SRNC (« Serving RNC »), où se trouvent les modules relevant de la couche 2 (RLC et MAC), et au moins un RNC relais appelé DRNC (« Drift RNC ») auquel est relié une station de base avec laquelle l'UE est en liaison radio. Des protocoles appropriés assurent les échanges entre ces RNC sur l'interface *Iur,* par exemple ATM (« Asynchronous Transfer Mode ») et AAL2 (« ATM Adaptation Layer No. 2 »). Ces mêmes protocoles peuvent également être employés sur l'interface Iub pour les échanges entre un node B et son RNC.

Les couches 1 et 2 sont chacune contrôlées par la sous-couche RRC, dont les caractéristiques sont décrites dans la spécification technique 3G TS 25.331, « RRC Protocol Specification », version 3.1.0 publiée en octobre 1999 par le 3GPP. L'étage RRC 15A, 15B supervise l'interface radio. Il traite en outre des flux à transmettre à la station distante selon un « plan de contrôle », par opposition au « plan d'utilisateur » qui correspond au traitement des données d'utilisateur issues de la couche 3.

La sous-couche RLC est décrite dans la spécification technique 3G TS 25.322, « RLC Protocol Specification », version 3.2.0 publiée en mars 2000 par le 3GPP. Dans le sens de l'émission, l'étage RLC 16A, 16B reçoit, suivant des canaux logiques respectifs, des flux de données constitués d'unités de données de service (RLC-SDU) issues de la couche 3. Un module RLC de l'étage 16A, 16B est associé à chaque canal logique pour effectuer notamment une segmentation des unités RLC-SDU du flux en unités de données de protocole (RLC-PDU) adressées à la sous-couche MAC et comprenant un en-tête RLC optionnel. Dans le sens de la réception, un module RLC effectue inversement un réassemblage des unités RLC-SDU du canal logique à partir des unités de données reçues de la sous-couche MAC.

L'étage RLC 16A, 16B peut avoir plusieurs modes de fonctionnement en fonction notamment du type de canal logique. Dans la suite de la présente description, on considérera le mode transparent de la sous-couche RLC, qui convient à un canal logique relatif à une communication en mode circuit. Dans ce mode transparent, le module RLC effectue les opérations de segmentation et réassemblage lorsqu'elles sont nécessaires, et il n'introduit aucun en-tête dans les unités RLC-PDU.

La sous-couche MAC est décrite dans la spécification technique 3G TS 25.321, « MAC Protocol Specification », version 3.3.0 publiée en mars 2000 par le 3GPP. Elle transpose un ou plusieurs canaux logiques sur un ou plusieurs canaux de transport TrCH (« Transport CHannel »). Dans le sens de l'émission, l'étage MAC 17A, 17B peut multiplexer un ou plusieurs canaux logiques dans un même canal de transport. Sur un tel canal de transport, l'étage MAC 17A, 17B délivre des blocs de transport successifs TrBk (« Transport Block ») consistant chacun en un en-tête MAC optionnel et une unité RLC-PDU issue d'un canal logique associé.

Pour chaque TrCH, la sous-couche RRC fournit à la sous-couche MAC un ensemble de formats de transport (TFS, « Transport Format Set »). Un format de transport comprend un intervalle de temps de transmission TTI (« Transmission Time Interval ») égal à 10, 20, 40 ou 80 ms, une taille de bloc de transport, une taille d'ensemble de blocs de transport et des paramètres définissant le schéma de protection à appliquer dans le TrCH par la couche 1 pour détecter et corriger les erreurs de transmission. En fonction du débit courant sur le ou les canaux logiques associés au TrCH, l'étage MAC 17A, 17B sélectionne un format de transport dans le TFS assigné par la sous-couche RRC, et il délivre dans chaque TTI un ensemble de blocs de transport conformément au format sélectionné, en indiquant ce format à la couche 1.

La couche 1 peut multiplexer plusieurs TrCH sur un canal physique donné. Dans ce cas, la sous-couche RRC assigne un ensemble de combinaisons de formats de transport (TFCS, « Transport Format Combination Set ») au canal physique, et la sous-couche MAC sélectionne dynamiquement une combinaison de formats de transport dans cet ensemble TFCS, ce qui définit les formats de transport à utiliser dans les différents TrCH multiplexés.

L'UMTS utilise la technique CDMA d'étalement de spectre, c'est-à-dire que les symboles transmis sont multipliés par des codes d'étalement constitués d'échantillons appelés « chips » dont la cadence (3,84 Mchip/s dans le cas de l'UMTS) est supérieure à celle des symboles transmis. Les codes d'étalement distinguent différents canaux physiques PhCH (« Physical CHannel ») qui sont superposés sur la même ressource de transmission constituée par une fréquence porteuse. Les propriétés d'auto- et d'intercorrélation des codes d'étalement permettent au récepteur de séparer les PhCH et d'extraire les symboles qui lui sont destinés. Pour l'UMTS en mode FDD (« Frequency Division Duplex ») sur la liaison descendante, un code de brouillage (« scrambling code ») est alloué à chaque station de base, et différents canaux physiques utilisés par cette station de base sont distingués par des codes de canal (« channelisation codes ») mutuellement orthogonaux. La station de base peut aussi utiliser plusieurs codes de brouillage mutuellement orthogonaux. Sur la liaison montante, la station de base utilise le code de brouillage pour séparer les UE émetteurs, et éventuellement le code de canal pour séparer les canaux physiques issus d'un même UE. Pour chaque PhCH, le code d'étalement global est le produit du code de canal et du code de brouillage. Le facteur d'étalement (égal au rapport entre la cadence des chips et la cadence des symboles) est une puissance de 2 comprise entre 4 et 512. Ce facteur est choisi en fonction du débit de symboles à transmettre sur le PhCH.

Les différents canaux physiques sont organisés en trames de 10 ms qui se succèdent sur la fréquence porteuse utilisée par la station de base. Chaque trame est subdivisée en 15 tranches temporelles (« timeslots ») de 666 µs. Chaque tranche peut porter les contributions superposées d'un ou plusieurs canaux physiques, comprenant des canaux communs et des canaux dédiés DPCH (« Dedicated Physical CHannel »). Chaque DPCH véhicule avec les données une indication de combinaison de formats de transport TFCI (« Transport Format Combination Indicator ») issue de la sous-couche MAC, permettant au module MAC destinataire de retrouver la structure des TrBk.

Il est possible, pour une même communication, d'établir plusieurs DPCH correspondant à des codes de canal différents, dont les facteurs d'étalement peuvent être égaux ou différents. Cette situation est notamment rencontrée lorsqu'un DPCH ne suffit pas à fournir le débit de transmission requis par l'application. Par ailleurs, cette même communication peut utiliser un ou plusieurs canaux de transport. Le codage et le multiplexage des flux de symboles d'information issus des TrCH sur les PhCH sont décrits en détail dans la spécification technique 3G TS 25.212, « Multiplexing and channel coding (FDD) », version 3.0.0 publiée en octobre 1999 par le 3GPP.

En ce qui concerne chaque canal logique pour lequel le module de traitement de la sous-couche RLC fonctionne en mode transparent, l'étage MAC 17A, 17B assure en outre un chiffrement des informations transmises et un déchiffrement des informations reçues. Sur le canal de transport correspondant, les TrBk relatifs à ce canal logique consistent chacun en une unité RLC-PDU chiffrée selon un mécanisme décrit dans le chapitre 8 de la spécification 3G TS 25.301 précitée.

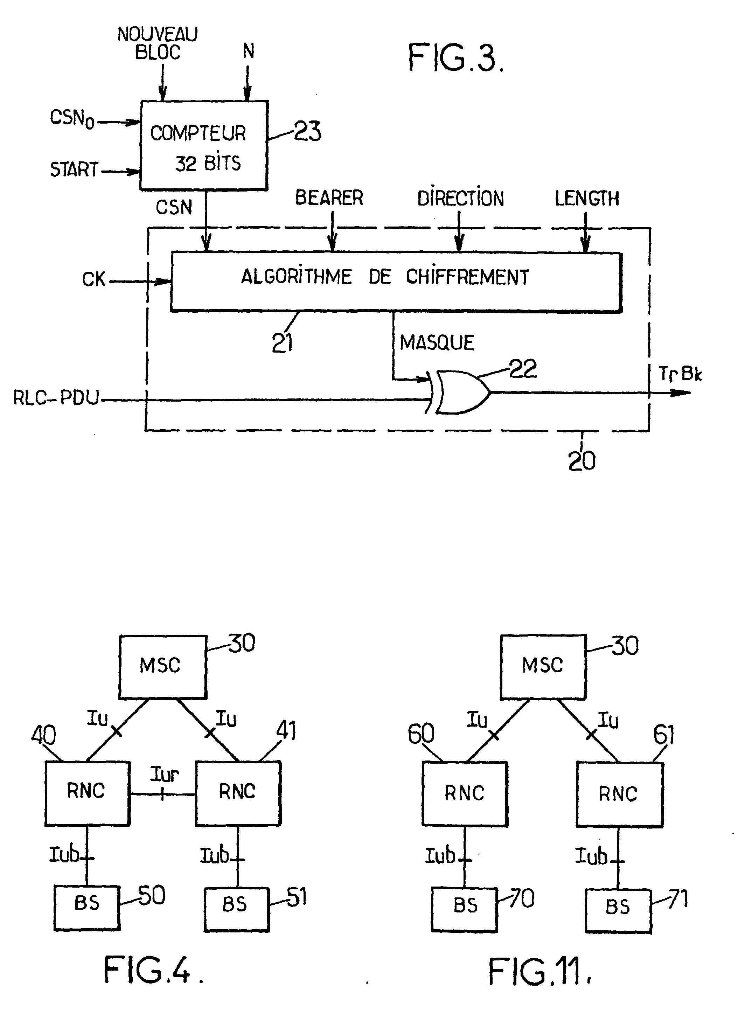

La figure 3 illustre le module de chiffrement 20 de l'étage MAC 17A, 17B du RNC ou de l'UE, utilisé pour un canal logique. Un algorithme de chiffrement 21 est exécuté pour générer un masque binaire qui est combiné aux bits d'information de l'unité RLC-PDU reçue en mode transparent du RLC, par une opération OU exclusif (porte 22). Un module identique est utilisable pour le déchiffrement. L'algorithme 21 calcule le masque sur la base des paramètres suivants :

- CK: clé de chiffrement secrète de M = 32 bits, définie dans une phase préalable d'authentification entre le coeur de réseau et l'UE ;
- CSN: numéro de séquence de chiffrement (« Ciphering Sequence Number ») composé de M = 32 bits ;

- BEARER : identifiant de canal logique, servant à générer des masques différents pour les différents canaux logiques ;
- DIRECTION : bit indiquant le sens de transmission (montant ou descendant), servant à générer des masques différents dans les deux sens ;
- LENGTH : longueur du masque en nombre de bits, donné par l'étage RRC en fonction du format de transport.

L'algorithme 21 combine le numéro de M bits CSN à la clé CK dans le but d'éviter que le même masque soit utilisé pour chiffrer des blocs différents. Ce nombre CSN est incrémenté au rythme des trames radio de 10 ms. La figure 3 montre ainsi le compteur de 32 bits 23 qui délivre le paramètre CSN. Ce compteur incrémente le numéro CSN d'une quantité N à chaque nouveau bloc du canal logique, N étant le nombre de trames par TTI sur le canal de transport portant ce canal logique (N = 1, 2, 4 ou 8). Le compteur est donc incrémenté de 1 toutes les 10 ms, de 2 toutes les 20 ms, de 4 toutes les 40 ms ou de 8 toutes les 80 ms. A l'initialisation de la communication chiffrée, l'étage RRC fournit une valeur initiale $CSN_0$ du numéro CSN et une commande de démarrage du compteur 23 (START). Ces opérations sont effectuées à la fois dans le RNC où est exécutée la tâche MAC et dans l'UE.

Un problème considéré dans la présente invention est celui du transfert des compteurs CSN lors d'un déplacement du module MAC assurant la fonction de chiffrement dans l'infrastructure du réseau. Un tel déplacement a lieu dans le cadre d'une procédure de transfert impliquant un changement de ressource d'accès radio (handover). La procédure de transfert peut ainsi donner lieu à un changement de SRNC, ce qui nécessite que le compteur CSN du nouveau SRNC soit synchronisé avec celui du précédent SRNC (et de l'UE), alors que les interfaces *lu* et/ou *lur* dont disposent les RNC pour communiquer entre eux sont asynchrones. On peut également envisager des cas où le déplacement du module MAC aurait lieu à l'intérieur d'un même RNC, si celui-ci utilise des circuits différents pour gérer les ressources d'accès employées avant et après le transfert.

Différents scénarios possibles pour la procédure de transfert sont décrits dans la spécification technique 3G TR 25.832, « Manifestations of Handover and SRNS Relocation », version 3.0.0 publiée en octobre 1999 par le 3GPP. On distingue d'une part le handover en douceur, ou SHO (« soft handover »), qui utilise un mode de macrodiversité et qui peut éventuellement être suivi par un changement de SRNC appelé « relocalisation » et d'autre part le handover brusque, ou HHO (« hard handover »), qui correspond par exemple à un changement de fréquence porteuse (avec ou sans changement de RNC) et/ou à un transfert entre deux RNC (d'un même réseau d'accès ou de réseaux d'accès différents) ne pouvant pas communiquer entre eux par une interface *lur.* Un HHO peut avoir lieu à l'intérieur d'un UTRAN si plusieurs fréquences porteuses sont allouées à l'opérateur de celui-ci ou si des interfaces *lur* ne sont pas prévues entre tous les RNC de cet UTRAN. Un HHO peut également avoir lieu entre deux réseaux d'accès distincts, par exemple entre deux UTRAN ou entre un UTRAN et un système de nature différente basé sur une architecture fonctionnelle semblable permettant notamment d'utiliser les mêmes procédures de chiffrement, tel qu'un système de type GERAN (« GSM / EDGE Radio Access Network »).

L'UMTS en mode FDD supporte une technique de macrodiversité, qui consiste à prévoir qu'un UE puisse simultanément communiquer avec des stations de base distinctes de façon telle que, dans le sens descendant, l'UE reçoive plusieurs fois la même information et que, dans le sens montant, le signal radio émis par l'UE soit capté par les stations de base pour former des estimations différentes ensuite combinées dans l'UTRAN.

La macrodiversité procure un gain de réception qui améliore les performances du système grâce à la combinaison d'observations différentes d'une même information. Elle permet également de réaliser des transferts intercellulaires en douceur (SHO), lorsque l'UE se déplace.

En macrodiversité, l'aiguillage des canaux de transport pour l'émission multiple depuis l'UTRAN ou l'UE et la combinaison de ces canaux de transport en réception sont des opérations qui incombent à un module de sélection et combinaison appartenant à la couche 1. Ce module est à l'interface avec la sous-couche MAC, et il se trouve dans le RNC desservant l'UE. Si les stations de base impliquées dépendent de RNC différents communiquant à travers l'interface *lur*, l'un de ces RNC joue le rôle de SRNC et l'autre celui de DRNC.

Lorsqu'un SHO est complété, le lien radio entre l'UE et la station de base d'origine est rompu. Il se peut alors qu'aucune station de base à portée de laquelle se trouve l'UE ne soit dans la dépendance du SRNC.

L'UTRAN peut très bien continuer à supporter la communication de cette manière. Toutefois, cela n'est pas optimal puisqu'il est possible de se dispenser des échanges intervenant sur l'interface *lur* et de libérer le précédent SRNC, en faisant en sorte que le DRNC devienne le nouveau SRNC pour la communication en cours. C'est l'objet de la procédure de relocalisation (« SRNS Relocation », voir section 7.2.3.2 de la spécification 3G TS 25.401 précitée), déclenchée à l'initiative du précédent SRNC.

Cette procédure de relocalisation comporte le transfert des instances RLC et MAC (ainsi que du module de sélection et de recombinaison de la couche 1 si la macrodiversité est maintenue) du précédent SRNC vers le précédent DRNC.

Un problème que cela pose est le transfert du compteur CSN employé par l'algorithme de chiffrement en mode RLC transparent. En effet, ce compteur doit rester synchrone avec celui situé dans la couche MAC du côté de l'UE, alors que les liaisons entre les RNC (à travers l'interface *Iu* et le coeur de réseau ou à travers l'interface *Iur*) sont en principe asynchrones.

Le numéro CSN de 32 bits peut être décomposé en un numéro de trame de connexion CFN (« Connection Frame Number ») correspondant aux P bits de poids les plus faibles de CSN et en un numéro d'hypertrame HFN (« HyperFrame Number ») correspondant aux 32-P bits de poids les plus forts (P = 8 selon le chapitre 8 de la spécification 3G TS 25.301 précitée).

Le RNC supervisant chaque cellule desservie par une station de base 13 tient à jour pour cette cellule un numéro de trame système SFN (« System Frame Number »), codé sur Q = 12 bits, qui est incrémenté à chaque nouvelle trame radio de 10 ms. Ce numéro SFN est diffusé par la station de base sur ses canaux communs de contrôle.

Un UE mesure le décalage temporel entre les signaux qu'il capte depuis des cellules voisines de sa cellule courante et sa propre horloge. Avant le déclenchement d'un SHO vers une cellule cible, l'UE fournit à son SRNC le décalage qu'il a mesuré pour cette cellule cible, qui correspond au décalage, dans une plage de $2^P \times 10$ ms (soit 2,56 s), entre le compteur SFN de la cellule cible, obtenu sur le canal commun, et son propre compteur CFN. Ce décalage est déterminé, sur la base d'une détection de motifs de synchronisation, avec une précision temporelle nettement plus fine que 10 ms, par exemple de l'ordre du temps symbole. Il sert à caler temporellement l'émission de la nouvelle station de base, à laquelle il est adressé à travers l'interface *Iur*, afin qu'en mode de macrodiversité, les informations reçues par l'UE depuis les différentes stations ne soient pas trop décalées les unes par rapport aux autres, ce qui nécessiterait une quantité de mémoire excessive pour pourvoir opérer la combinaison des observations.

Du fait de la fourniture de ce décalage, le DRNC connaît a priori les P bits de poids faibles du compteur CSN à employer pour le chiffrement et le déchiffrement. Mais cela ne fournit pas les bits de poids forts (HFN). Les spécifications actuelles du 3GPP prévoient que la procédure de relocalisation comporte l'envoi par le SRNC d'un message « Relocation_Required » sur l'interface *Iu*, dans lequel est inséré le numéro HFN afin que le DRNC puisse synchroniser son compteur de séquence de chiffrement. A réception de ce message, le coeur de réseau lance la tâche qui conduira à l'aiguillage de la communication vers le DRNC, et retransmet de façon transparente le HFN à ce dernier.

Ces dispositions ne résolvent pas le problème précité parce qu'entre le moment où le SRNC transmet la valeur de HFN et celui où le DRNC la reçoit, le HFN en vigueur du côté de l'UE a pu être incrémenté. Cela se produit chaque fois que le HFN met plus de 2,56 s à être reçu par le DRNC, ce qui est difficile à éviter avec certitude compte tenu des files d'attente que peuvent rencontrer les messages dans le coeur de réseau asynchrone et des temps de traitement du message « Relocation_Required » par les commutateurs 10. Des erreurs peuvent aussi survenir si le HFN met moins de temps à arriver au DRNC : s'il est émis à un moment où CFN vaut 255 par exemple, il est très probable qu'il soit reçu par le DRNC une fois que la valeur de HFN aura augmenté au niveau de l'UE.

Le problème ci-dessus est rencontré, avec davantage d'acuité encore, dans les HHO qui sont exécutés sans utiliser le mode de macrodiversité.

Dans un HHO, il y a généralement une phase de diffusion double pendant laquelle la même information descendante est transmise simultanément sur les deux ressources d'accès. Ceci permet à l'UE de recevoir les informations qui lui sont destinées sans interruption dès qu'il passe sur la seconde ressource d'accès. Il faut donc que le RNC en charge de la cellule cible ait rapidement connaissance du compteur de séquence de chiffrement CSN relatif à l'UE lorsqu'un HHO doit être exécuté. D'autre part, le RNC de la cellule cible, s'il est différent du précédent SRNC, n'a généralement aucune connaissance préalable du compteur CFN puisqu'il n'y a pas de macrodiversité. La valeur envoyée par le précédent SRNC doit donc couvrir jusqu'aux bits de poids les plus faibles de CSN de sorte qu'elle sera très vraisemblablement obsolète lorsqu'elle sera reçue par le RNC de la cellule cible, compte tenu des délais d'acheminement dans le réseau asynchrone. Cet inconvénient est difficile à éliminer en l'absence de synchronisation des stations de base, laquelle n'est pas nécessaire au fonctionnement d'un réseau UMTS et n'est pas exploitée par la norme.

Il est à noter que dans les modes non-transparents de la sous-couche RLC, le problème considéré ci-dessus ne se pose pas. Ces modes non-transparents sont destinés aux transmissions par paquets, pour lesquelles il n'est généralement pas gênant d'interrompre momentanément la transmission lors d'un handover ou d'une procédure de relocalisation afin de s'assurer, par exemple par un mécanisme d'acquittement, que la bonne valeur de compteur a été reçue. D'autre part, c'est la sous-couche RLC qui assure la fonction de chiffrement/ déchiffrement en mode non-transparent, en utilisant un numéro de séquence de l'en-tête de chaque unité RLC-PDU pour chiffrer les données contenues dans cette unité RLC-PDU. Ce numéro de séquence est transmis en clair, de sorte que les compteurs de chiffrement n'ont pas besoin d'être synchronisés aux deux extrémités.

Dans les systèmes GSM de seconde génération (« Global System for Mobile communication ») utilisant les techniques d'accès multiple à répartition dans le temps (TDMA, « Time Division Multiple Access »), le chiffrement est effectué uniquement sur l'interface air. L'incrémentation de la clé de chiffrement est basée sur la synchronisation par rapport aux hypertrames TDMA, qui est obtenue de façon non ambiguë de part et d'autre du lien radio dans le cadre du schéma de multiplexage temporel. En conséquence, le problème ci-dessus ne se pose pas non plus.

WO98/09458 décrit un système d'accès radio dérivé du GSM, dans lequel le chiffrement des communications n'est assuré que sur l'interface air. Ce système a pour contrainte de requérir une synchronisation des stations de base à l'échelle des multitrames TDMA. De plus, la synchronisation des compteurs de chiffrement est mise en défaut lorsque les échanges prévus entre les stations de base prennent un temps supérieur à la durée, relativement courte, d'une multitrame (120 ms).

Un but de la présente invention est d'apporter une solution au problème de synchronisation de compteurs de chiffrement exposé ci-dessus.

L'invention propose ainsi un procédé de contrôle d'un canal logique de communication en mode circuit tel qu'énoncé dans la revendication 1.

Ceci permet de préserver la continuité de l'incrémentation du numéro de séquence de chiffrement au niveau du terminal radio. Le second contrôleur traite les données de réglage reçues du premier contrôleur pour aligner le numéro de séquence de chiffrement qu'il incrémente avec celui incrémenté de façon autonome par le terminal radio. L'exécution de la procédure de transfert peut donc être transparente pour la couche MAC du terminal.

Le décalage entre le numéro de séquence de chiffrement et la référence de temps disponible au second contrôleur est de préférence mesuré par le terminal sur la base de signaux radio reçus en provenance d'une station de base reliée au second contrôleur et portant de l'information relative à ladite référence de temps. Cette référence de temps correspond avantageusement à un compteur de trames tenu pour une station de base reliée au second contrôleur.

Dans le cas d'une procédure de relocalisation consécutive à un SHO, ce décalage peut avoir été au moins en partie fourni au second contrôleur au cours de l'établissement d'un nouveau chemin de communication passant par une station de base reliée à ce second contrôleur. Ainsi, dans une réalisation du procédé, la procédure de transfert comprend :

- une phase d'établissement d'au moins un premier chemin supplémentaire entre le coeur de réseau et le terminal radio, passant par une station de base reliée au second contrôleur et par le second contrôleur en plus du premier contrôleur constituant le contrôleur maître, pendant laquelle une partie au moins des données de réglage représentatives dudit décalage est transmise du premier contrôleur au second contrôleur ;
- une phase de macrodiversité pendant laquelle de l'information relevant du canal logique est transmise simultanément suivant au moins deux premiers chemins de communication incluant ledit premier chemin supplémentaire ; et
- une phase de relocalisation pendant laquelle les données de réglage représentatives de la valeur courante du numéro de séquence de chiffrement sont transmises du premier contrôleur au second contrôleur, après quoi chaque premier chemin est remplacé par un second chemin ne passant pas par le premier contrôleur.

Pour simplifier la procédure, la phase de relocalisation sera généralement effectuée après une phase de suppression de chaque premier chemin ne passant pas par le second contrôleur.

Lorsqu'il y a une phase de macrodiversité, les données de réglage sont avantageusement transmises du premier contrôleur au second contrôleur à travers une interface prévue entre les contrôleurs de réseau radio, sans passer par le coeur de réseau. Ceci évite que les messages transportant les données de décalage aient à être traités par les commutateurs du coeur de réseau, ce qui minimise la durée de transmission des données de réglage et donc le risque qu'elles arrivent en retard au second contrôleur.

En variante, les données de réglage transmises pendant la phase d'établissement du premier chemin supplémentaire peuvent être transmises à travers l'interface prévue entre les contrôleurs de réseau radio, sans passer par le coeur de réseau, tandis que le reste des données de réglage est transmis pendant la phase de relocalisation par l'intermédiaire du coeur de réseau. Ceci convient notamment lorsque le décalage est représenté sur un nombre de bits supérieur à ce qui est nécessaire à l'exécution du SHO. Le risque d'obsolescence des données de réglage transmises par l'intermédiaire du coeur de réseau est alors réduit car ces données peuvent être validées dès lors qu'elles ne parviennent pas au second contrôleur avec un retard supérieur à un cycle des valeurs dû décalage.

Dans une autre réalisation du procédé, les premier et second chemins ont des liens radio supportés par des ressources d'accès différentes, par exemple des fréquences porteuses différentes (cas du HHO). La procédure de transfert peut alors comprendre :

- l'envoi des données de réglage du premier contrôleur au second contrôleur une fois que le terminal est à portée radio d'une station de base du second chemin reliée au second contrôleur ;
- une phase d'émission simultanée de signaux radio transportant la même information chiffrée par les stations de base respectives des premier et second chemins ;
- le basculement du terminal du lien radio du premier chemin au lien radio du second chemin ; et
- la suppression du premier chemin, le terminal émettant et recevant l'information chiffrée selon le second chemin.

Dans ce cas, les données de réglage sont généralement transmises du premier contrôleur au second contrôleur par l'intermédiaire du coeur de réseau.

Un autre aspect de la présente invention se rapporte à un réseau d'accès d'un système cellulaire de radiocommunication tel qu'énoncé dans la revendication 18.

D'autres particularités et avantages de la présente invention apparaîtront dans la description ci-après d'exemples de réalisation non limitatifs, en référence aux dessins annexés, dans lesquels :

- la figure 1, précédemment commentée, est un schéma d'un réseau UMTS ;
- la figure 2, précédemment commentée, est un diagramme montrant l'organisation en couches de protocoles de communication employés sur l'interface radio du réseau UMTS ;
- la figure 3, précédemment commentée, est un schéma synoptique d'un module de chiffrement utilisé dans la couche MAC d'un réseau UMTS;
- la figure 4 est un schéma simplifié d'un réseau UMTS auquel l'invention peut s'appliquer ;
- les figures 5 à 8 sont des schémas du réseau de la figure 4 montrant les liens actifs à différents instants d'une communication ;
- les figures 9 et 10 sont des organigrammes d'étapes d'une procédure de relocalisation respectivement exécutées par un RNC source et par un RNC cible ;
- la figure 11 est un schéma simplifié d'un autre réseau UMTS auquel l'invention peut s'appliquer ;
- les figures 12 à 14 sont des schémas du réseau de la figure 11 montrant les liens actifs à différents instants d'une communication.

La figure 4 montre une infrastructure de réseau UMTS supportant le mode de macrodiversité entre plusieurs SRNS. L'infrastructure dessinée a une configuration volontairement simplifiée pour clarifier l'explication de l'invention. Le coeur de réseau comprend un commutateur du service mobile (MSC, « Mobile service Switching Center ») 30 pour le mode circuit, relié par des interfaces *lu* à deux sous-systèmes de réseau radio (SRNS) ayant chacun un RNC 40, 41. Les deux RNC 40, 41 communiquent entre eux par une interface *lur,* et contrôlent respectivement des stations de base 50, 51 (node B) à travers des interfaces *lub*.

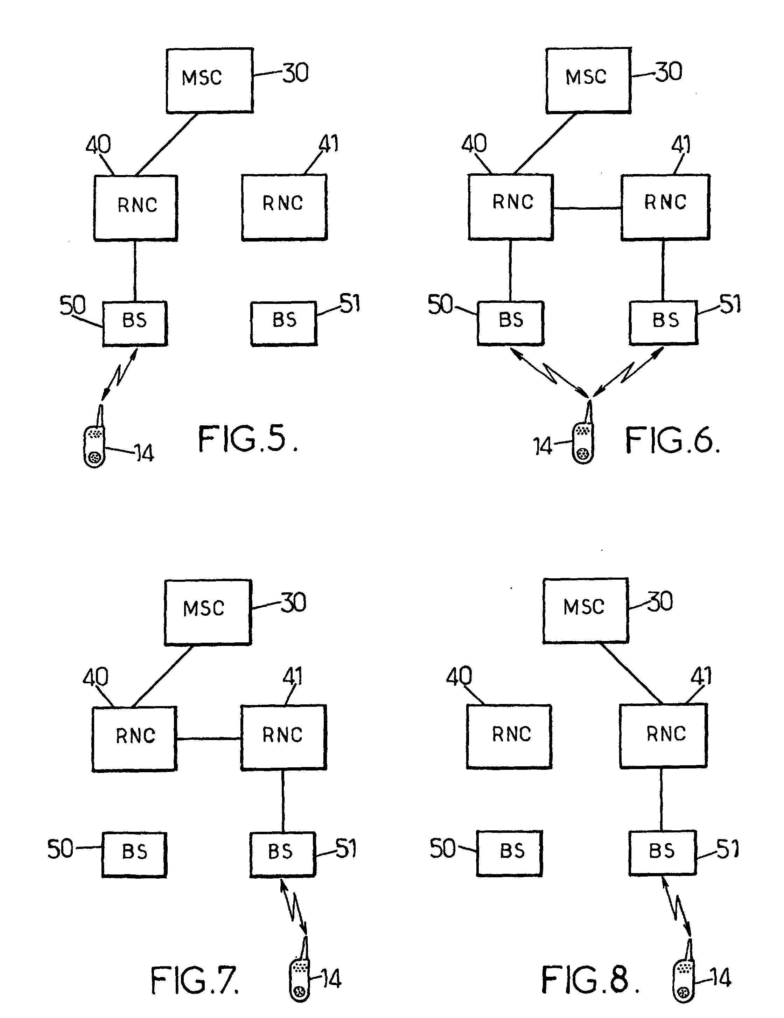

Les figures 5 à 8 montrent des chemins de communication actifs entre le coeur de réseau et un UE 14 lorsque celui-ci se déplace. Dans la situation de la figure 5, un premier chemin a été établi de façon classique entre le MSC 30 et l'UE 14 à travers le RNC 40 jouant le rôle de SRNC et la station de base 50. Le SRNC 40 et l'UE ont chacun une instance MAC qui, pour chaque canal logique dédié en mode circuit et chaque sens de communication, assure les fonctions de chiffrement et de déchiffrement de l'information transmise sur ce premier chemin, de la manière indiquée en référence à la figure 3. Les paramètres statiques (CK, BEARER, DIRECTION, LENGTH) du module 20 et les paramètres d'initialisation du compteur 23 ont été fournis par l'étage RRC.

Dans la situation de la figure 6, un autre chemin a été établi en macrodiversité entre le MSC 30 et l'UE 14 à travers le RNC 40, le RNC 41 jouant le rôle de DRNC et la station de base 51. Avant l'établissement de cet autre chemin, l'UE 14 a mesuré le décalage temporel $\Delta$ entre son propre numéro de séquence de chiffrement CSN et le numéro de trame SFN diffusé par la station de base 51 sur ses canaux communs descendants. Ce décalage $\Delta$ est mesuré avec une résolution plus fine que celle des trames de 10 ms. Sa valeur est rapportée par l'UE au SRNC 40 (couche RRC), et le SRNC 40 la transmet au DRNC 41 sur l'interface *lur* dans la procédure d'établissement de macrodiversité, afin que la station de base 51 ait, en ce qui concerne l'UE 14, une émission alignée avec celle de la station de base 50 à une échelle de l'ordre du temps symbole.

Dans l'état actuel des spécifications, la couche RRC de l'UE communique à celle de son SRNC la valeur de $\Delta$ modulo $2^P \times 10$ ms = 2,56 s. On note $\Delta_k$ = (CSN - SFN) mod $2^k$ le nombre représenté par les k bits de poids les plus faibles de la partie entière du décalage $\Delta$ exprimé en unités de 10 ms ($1 \leq k \leq Q$). Le CSN étant sur M = 32 bits et le SFN sur Q = 12 bits, l'UE mesure $\Delta_Q = \Delta_{12}$. Mais il rend seulement compte à l'UTRAN de $\Delta_P = \Delta_8$.

Dans la situation de la figure 6, le canal logique est chiffré sur chacun des deux chemins par les mêmes modules de chiffrement/déchiffrement situés dans les sous-couches MAC du SRNC 40 et de l'UE 14. Un module de sélection et combinaison a été créé dans la couche 1, d'une part dans le SRNC 40 et d'autre part dans l'UE 14.

Dans la situation de la figure 7, le chemin passant par la station de base 50 a été supprimé, le lien radio n'étant plus d'assez bonne qualité. Le RNC 40 joue toujours le rôle de SRNC bien qu'il n'ait plus aucune station de base en liaison radio avec l'UE. En revanche, l'autre chemin est maintenu (il pourrait bien entendu y avoir encore d'autres chemins passant par le DRNC 41 en macrodiversité ; en outre le chemin qui a été établi en premier par l'intermédiaire du DRNC 41 pourrait avoir été supprimé).

Les spécifications prévoient que dans une telle situation, le SRNC 40 puisse demander une relocalisation conduisant à la situation illustrée par la figure 8 : le précédent DRNC 41 devient le nouveau SRNC vers lequel le MSC 30 commute la communication. La demande est faite dans un message « Relocation_Required » émis vers le MSC sur l'interface *lu* et contenant un champ destiné à être transmis de façon transparente de la couche RRC du RNC source 40 à celle du RNC cible 41. D'après les spécifications actuelles, ce champ contient le HFN courant, c'est-à-dire les M-P = 24 bits de poids forts du numéro de séquence de chiffrement CSN utilisé par le RNC 40 et l'UE 14. Le coeur de réseau traite le message « Relocation_Required » et transmet de façon transparente la valeur de HFN au RNC 41, celui-ci pouvant la compléter par la valeur courante du CFN déduite du compteur SFN de la cellule cible et du décalage $\Delta_8$ précédemment reçu : CFN = (SFN + $\Delta_8$) mod $2^8$. Le numéro CSN ainsi complété peut être utilisé par la nouvelle instance MAC créée dans le RNC 41 pour le canal logique. Mais ce CSN est erroné si le HFN a été modifié au niveau de l'UE pendant le temps de transit du HFN entre les RNC 40 et 41.

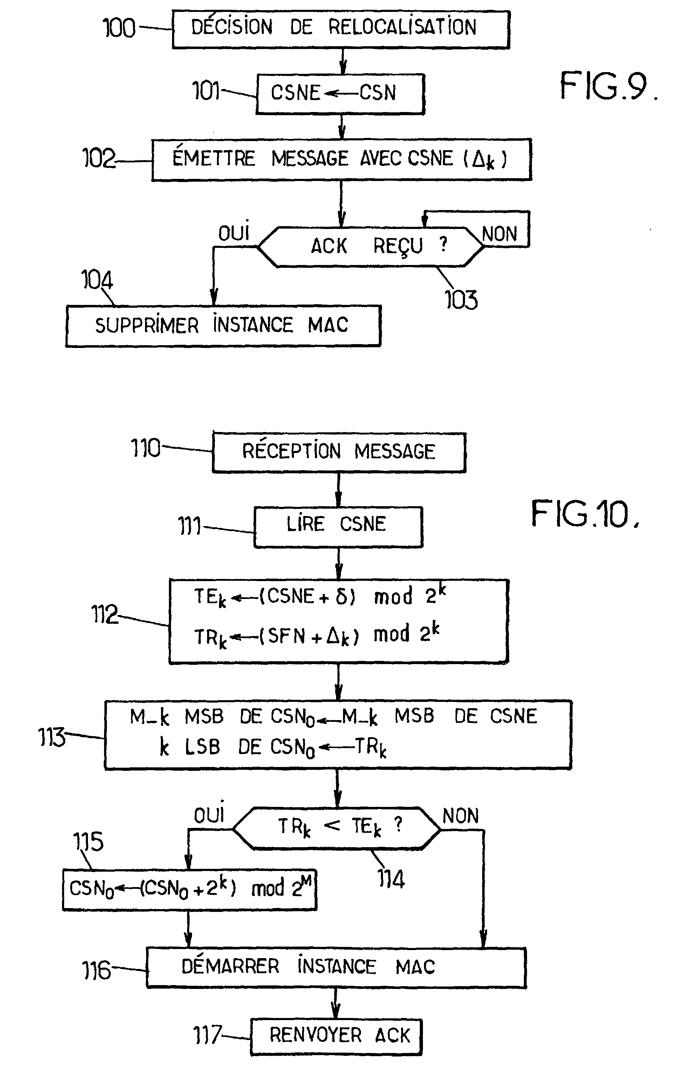

Pour éviter ces erreurs, les RNC 40, 41 peuvent appliquer la procédure de relocalisation des figures 9 et 10 qui peut être exécutée dans la couche RRC.

Une fois que la relocalisation été décidée (étape 100 de la figure 9), le RNC source 40 note la valeur courante CSNE du numéro de séquence de chiffrement CSN (étape 101) et l'envoie au RNC cible 41 dans un message pouvant en outre contenir la totalité ou une partie des bits d'une quantité $\Delta_k$ avec k $\le$ Q (étape 102), après quoi il attend un acquittement de ce message (étape 103).

Si k $\le$ P, il n'est pas nécessaire d'inclure $\Delta_k$ dans le message puisque $\Delta_P$ est déjà connu au RNC 41.

Si P < k $\le$ Q, on peut y inclure $\Delta_k$ ou seulement ses k-P bits de poids forts. Ceci peut être réalisé en adaptant le compte rendu de mesures envoyé au SRNC par l'UE sur la connexion RRC de façon que ce compte rendu inclue $\Delta_k$ (qui est mesuré) et non seulement $\Delta_P$.

Lorsqu'il reçoit ce message (étape 110 de la figure 10), le RNC cible 41 lit à l'étape 111 la valeur CSNE qu'il contient et le cas échéant l'information sur le décalage $\Delta_k$, puis à l'étape 112 il calcule deux index de trame $TE_k$ et $TR_k$ selon :

$$TE_k = (CSNE + \delta) \bmod 2^k$$

$$TR_k = (SFN + \Delta_k) \bmod 2^k$$

où SFN est la valeur courante du compteur de trame de la cellule cible, correspondant à la trame pour laquelle le compteur 23 du RNC 41 sera initialisé à une valeur $CSN_0$. L'index $TE_k$ représente, dans un cycle de $2^k$ trames repéré par rapport au décompte de CSN par l'UE, l'instant à partir duquel le message est attendu au RNC cible. L'entier positif ou nul $\delta$ désigne une durée minimale d'acheminement du message en unités de 10 ms. Si on n'a aucune information a priori sur cette durée minimale, on prend $\delta = 0$. L'index $TR_k$ représente, dans le même cycle, la valeur courante des k bits de poids faibles du numéro CSN au niveau de l'UE. L'affectation de $TR_k$ aux k bits de poids faibles de $CSN_0$ est effectuée à l'étape 113, où les M-k bits de poids forts de CSNE sont en outre affectés à ceux de $CSN_0$.

Si l'index $TR_k$ est plus petit que l'index $TE_k$ (étape 114), il y a eu un débordement dans les k bits de poids faibles du compteur CSN tenu par l'UE pendant l'acheminement du message, de sorte que les bits de poids forts doivent être mis à jour. Pour cela, la valeur d'initialisation $CSN_0$ est augmentée de $2^k$, modulo $2^M$, à l'étape 115. Si $TR_k \ge TE_k$ à l'étape 114, la valeur d'initialisation $CSN_0$ obtenue à l'étape 113 est correcte.

Le RNC cible 41 peut alors démarrer l'instance MAC pour la communication en cours, et en particulier le module de chiffrement 20 et son compteur associé 23 (étape 116). Il crée également un module de sélection et combinaison si l'UE est en macrodiversité dans le SRNS cible. Il renvoie ensuite un acquittement au RNC source 40 (étape 117) pour indiquer que la relocalisation a été effectuée.

A réception de cet acquittement, le RNC source supprime son instance MAC relative à l'UE 14, et le cas échéant son module de sélection/combinaison (étape 104). Si l'acquittement n'est pas reçu dans un délai déterminé, il peut répéter la procédure de la figure 9 ou renoncer à demander la relocalisation.

La procédure des figures 9 et 10 aligne correctement le processus de chiffrement dans le RNC cible sur celui exécuté dans l'UE, dès lors que le délai d'acheminement du message du RNC source au RNC cible ne dépasse pas $(2^k + \delta) \times$ 10 ms.

Cette condition est facile à remplir. On peut par exemple prendre k = Q = 12, ce qui permet des délais allant jusqu'à au moins 40 s. Pour cela, le décalage communiqué au DRNC dans la préparation de la macrodiversité peut être élargi à Q bits. En variante, on peut fournir les Q-P bits de poids forts manquants avec la valeur CSNE. Le message des figures 9 et 10 peut alors être le message « Relocation_Required » transmis via le coeur de réseau, la valeur CSNE et éventuellement les Q-P bits de poids forts de $\Delta_Q$ étant placés dans le champ transmis de façon transparente à la couche RRC du RNC cible.

On peut d'autre part transmettre le message des figures 9 et 10 sur l'interface *Iur*. Cette interface est également asynchrone, mais elle permet généralement des délais d'acheminement plus courts car le coeur de réseau n'a pas à traiter les messages. Dans ce cas, on peut se permettre de réduire le nombre k, en prenant par exemple k = P = 8, ce qui évite de modifier les messages de compte rendu remonté par les UE.

La procédure des figures 9 et 10 convient également dans le cas d'une relocalisation effectuée dans le cadre d'un HHO. Cela pourra se produire dans la configuration schématique de la figure 11 qui est similaire à celle de la figure 4 sauf qu'il n'y a pas d'interface *Iur* entre les deux RNC impliqués 60, 61. On notera qu'il pourrait y avoir une telle interface *Iur*, mais ne servant pas au handover, par exemple parce que celui-ci est entre deux fréquences porteuses différentes. Dans une autre réalisation, les RNC 60, 61 appartiennent à des réseaux d'accès différents (un UTRAN et un GERAN par exemple).

Un scénario typique de HHO est illustré par les figures 12 à 14 dans la configuration de réseau de la figure 11. Initialement (figure 12), un chemin est établi de façon classique entre le MSC 30 du coeur de réseau et l'UE 14 à travers le RNC source 60 et la station de base 70 qui en dépend. L'UE effectue les mesures prescrites sur les canaux communs des cellules voisines de la sienne, en particulier ceux de la station de base 71 reliée au RNC 61 dans la situation illustrée par la figure 12. Lorsque l'analyse de ces mesures montre qu'un HHO est souhaitable vers la station de base 71, le SRNC 60 adresse à son MSC 30 un message de demande de HHO (« Handover_Prepare ») désignant le RNC cible 61.

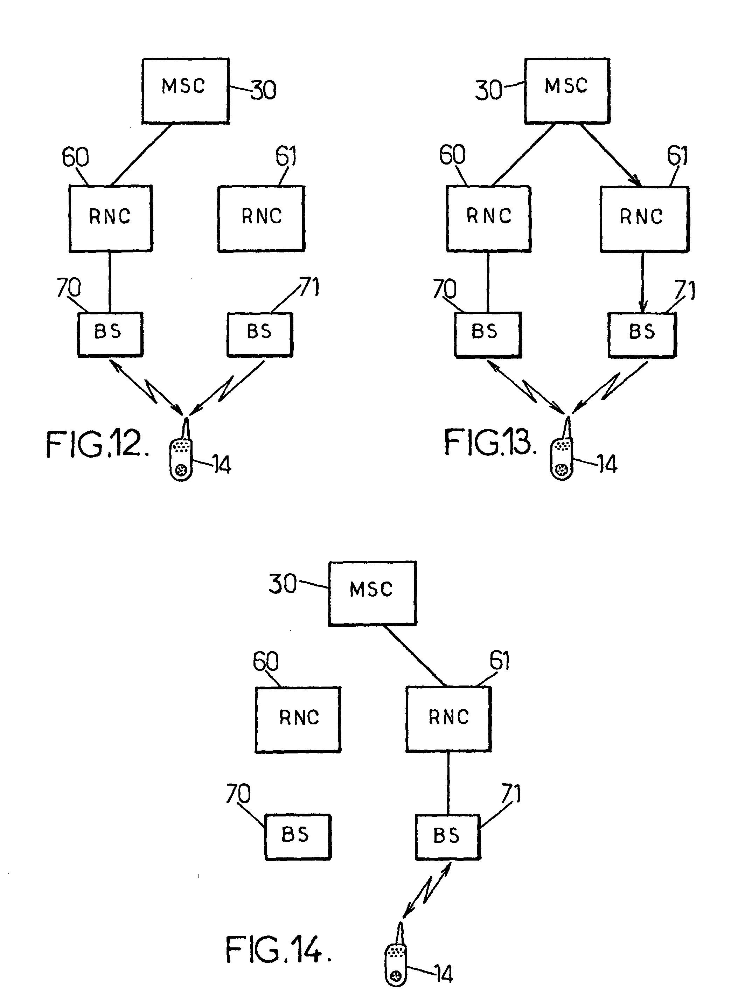

Lorsque le handover est déclenché, un second chemin est établi en commençant par le sens descendant (figure 13). La même information relevant du canal logique est transmise deux fois depuis le MSC 30 (ou plusieurs MSC), une fois par l'intermédiaire du RNC 60 et de la station de base 70 et une fois par l'intermédiaire du RNC 61 et de la station de base 71. Dans le sens montant, le terminal 14 garde les paramètres du canal physique du premier chemin jusqu'à ce qu'il reçoive un message « Handover_Command » lui demandant de basculer sur l'autre station de base 71. A réception de ce message, l'UE 14 exécute la commande, ce qui une fois le réseau synchronisé complète l'établissement du second chemin. Le premier chemin est alors supprimé (figure 14).

Dans la situation illustrée par la figure 13, l'information descendante est chiffrée sur les deux chemins entre le RNC et l'UE. L'instance MAC du RNC cible 61 a démarré son compteur 23 avec une valeur initiale $CSN_0$ fournie par la procédure des figures 9 et 10. Les valeurs CSNE et $\Delta_k$ peuvent être incluses par le RNC source 60 dans le message « Handover_Prepare » et retransmises par le coeur de réseau au RNC cible 61. Il faut donc que l'UE ait mesuré $\Delta_k$ et en ait rendu compte à son SRNC. On prendra de préférence k = Q = 12.

Dès qu'il bascule sur la station de base 71, l'UE a son numéro CSN synchronisé sans avoir eu à le modifier. Il peut donc recevoir immédiatement l'information descendante et émettre l'information montante avec le bon chiffrement. Une fois que la station de base 61 a acquis la synchronisation, le second chemin est complété.

Dans certains cas, l'UE peut avoir eu une phase de macrodiversité entre les RNC source et cible sur une première fréquence porteuse avant d'effectuer un HHO avec changement de porteuse vers le RNC cible. Dans un tel cas, le RNC cible dispose déjà du décalage $\Delta_k$ ou $\Delta_P$, de sorte qu'il n'est pas obligatoire de le répéter au moment du HHO.

Il se peut également qu'un autre UE ait eu une phase de macrodiversité entre les RNC source (SRNC) et cible (DRNC). Lorsque la procédure de HHO commence pour l'UE 14, le RNC source 60 peut alors déterminer la valeur pertinente du décalage $\Delta_k$ sans l'avoir nécessairement reçue de l'UE 14 : il la déduit du CFN des deux UE et du décalage mesuré et indiqué par l'autre UE.

Il est à noter que les contrôleurs 60 et 61 fonctionnant de la manière décrite ci-dessus en référence aux figures 11 à 14 pourraient, selon une variante de l'invention, être deux parties distinctes d'un équipement situé à un noeud donné du réseau. Cet équipement peut être de type RNC dans l'architecture UMTS, et les deux parties distinctes peuvent être des circuits gérant séparément les deux chemins en ce qui concerne au moins la couche MAC, ces circuits communiquant entre eux de façon asynchrone. Ces circuits sont par exemple portés par deux cartes différentes ou contenus dans deux cabinets différents du RNC.

On notera encore que la procédure des figures 9 et 10 peut prendre diverses formes équivalentes. Ainsi, plutôt que de contenir explicitement CSNE et $\Delta_k$, le ou les messages envoyés au RNC cible pourraient contenir toute combinaison permettant à ce dernier de retrouver ces paramètres.

Par exemple, dans une relocalisation consécutive à un SHO où le RNC cible dispose déjà du décalage $\Delta_P$, le message envoyé au RNC cible peut contenir la valeur courante HFNE du HFN et un nombre $SFNE_k$ représenté par les k bits de poids les plus faibles du SFN courant de la cellule cible (P < k ≤ Q), soit $SFNE_k$ = (CSNE - $\Delta_k$) mod $2^k$. Le RNC cible peut alors opérer comme précédemment avec $\Delta_k$ = (HFNE × $2^P$ - $SFNE_k$ + $\Delta_P$) mod $2^k$ et CSNE = (HFNE × $2^P$ + $\Delta_P$) mod $2^M$.

Dans une autre variante, convenant notamment au cas du HHO, le message envoyé au RNC cible contient la valeur courante CSNE du CSN et le nombre $SFNE_k$ précité (P <k ≤ Q). Le RNC cible peut opérer de la même manière avec $\Delta_k$ = (CSNE - $SFNE_k$) mod $2^k$.

D'autre part, la référence de temps disponible au second RNC 41 ou 61, par rapport à laquelle est exprimé le décalage $\Delta_k$ ou toute quantité liée à ce décalage, pourrait être différente du SFN de la cellule cible, par exemple :

- le SFN d'une autre station de base reliée au RNC cible, dont le canal de contrôle commun a été détecté par l'UE (ou par un autre UE supervisé par le RNC source), ce qui permet la mesure du décalage $\Delta_k$ relatif à cette autre station. Comme le RNC cible connaît les écarts entre les SFN des stations de base qu'il supervise, il peut ainsi retrouver la bonne valeur de $\Delta_k$ ;
- le SFN d'une station de base quelconque, en particulier celui de la cellule source, si les RNC ont connaissance des écarts de SFN entre les différentes cellules, ce qui est parfois utilisé dans des services de localisation d'abonné ;
- une référence de temps commune aux RNC, obtenue par exemple au moyen de récepteurs de type GPS ou analogue captant des signaux synchronisés émis par une constellation de satellites.

Dans une autre réalisation de l'invention, le RNC source ne transmet explicitement qu'une partie de poids fort du CSN, par exemple le HFN, en s'astreignant à le faire quand la partie de poids faible restante, à savoir le CFN, a une valeur déterminée connue du RNC cible (par exemple 0), ce qui revient à fournir cette valeur implicitement. Cette façon de procéder peut convenir au cas d'une relocalisation consécutive à un SHO puisque les délais d'exécution d'une telle relocalisation ne sont pas critiques.

**Revendications**

1. Procédé de contrôle d'un canal logique de communication en mode circuit entre un terminal radio (14) et une infrastructure de radiocommunication cellulaire, l'infrastructure comportant au moins un coeur de réseau (30), des contrôleurs de réseau radio (40, 41; 60,61) reliés au coeur de réseau et comprenant des premier et second contrôleurs, et des stations de base (50, 51; 70, 71) pourvues d'interfaces radio et reliées chacune à l'un des contrôleurs de réseau radio, le procédé comprenant les étapes suivantes :

   - établir au moins un premier chemin de communication entre le coeur de réseau et le terminal, passant par l'une des stations de base (50 ; 70) et par le premier contrôleur (40 ; 60) constituant un contrôleur maître pour ledit premier chemin ;
   - transmettre de l'information relevant du canal logique suivant le premier chemin de communication ;
   - établir au moins un second chemin de communication entre le coeur de réseau et le terminal, passant par l'une des stations de base (51 ; 71) et par le second contrôleur (41 ; 61) constituant un contrôleur maître pour ledit second chemin ; et
   - transmettre de l'information relevant du canal logique suivant le second chemin de communication,

   **caractérisé en ce que** l'information transmise suivant chaque chemin de communication est chiffrée dans une portion dudit chemin allant du contrôleur maître au terminal radio, le chiffrement étant effectué en fonction de paramètres comprenant une clé secrète (CK) et un numéro de séquence de chiffrement (CSN) combiné à ladite clé, le contrôleur maître et le terminal incrémentant conjointement le numéro de séquence de chiffrement au rythme de trames de durée déterminée, de façon à disposer des mêmes paramètres de chiffrement pour permettre le déchiffrement de l'information,
   et **en ce que** le second chemin est établi dans une procédure de transfert comprenant la transmission de données de réglage du premier contrôleur au second contrôleur et la suppression de chaque premier chemin, les données de réglage étant représentatives d'une valeur courante du numéro de séquence de chiffrement et d'un décalage entre le numéro de séquence de chiffrement et une référence de temps disponible au second contrôleur.

2. Procédé selon la revendication 1, dans lequel le second contrôleur (41 ; 61) traite les données de réglage reçues du premier contrôleur (40 ; 60) pour aligner le numéro de séquence de chiffrement qu'il incrémente avec celui incrémenté de façon autonome par le terminal radio (14).

3. Procédé selon la revendication 1 ou 2, dans lequel ledit décalage ($\Delta_k$) est mesuré par le terminal (14) sur la base de signaux radio reçus en provenance d'une station de base reliée au second contrôleur (41 ; 61) et portant de l'information relative à ladite référence de temps.

4. Procédé selon la revendication 3, dans lequel ladite référence de temps comprend un compteur de trames tenu pour une station de base reliée au second contrôleur (41 ; 61).

5. Procédé selon l'une quelconque des revendications 1 à 4, dans lequel la procédure de transfert comprend :

   - une phase d'établissement d'au moins un premier chemin supplémentaire entre le coeur de réseau (30) et le terminal radio (14), passant par une station de base (51) reliée au second contrôleur et par le second contrôleur (41) en plus du premier controleur, le premier contrôleur constituant le contrôleur maître pour ledit premier chemin supplémentaire, phase d'établissement pendant laquelle une partie au moins des données de réglage représentatives dudit décalage est transmise du premier contrôleur au second contrôleur ;
   - une phase de macrodiversité pendant laquelle de l'information relevant du canal logique est transmise simultanément suivant au moins deux premiers chemins de communication incluant ledit premier chemin supplémentaire ; et
   - une phase de relocalisation pendant laquelle les données de réglage représentatives de la valeur courante du numéro de séquence de chiffrement sont transmises du premier contrôleur au second contrôleur, après quoi chaque premier chemin est remplacé par un second chemin ne passant pas par le premier contrôleur (40).

6. Procédé selon la revendication 5, dans lequel la phase de relocalisation est effectuée après une phase de suppression de chaque premier chemin ne passant pas par le second contrôleur (41).

7. Procédé selon la revendication 5 ou 6, dans lequel les données de réglage sont transmises du premier contrôleur (40) au second contrôleur (41) à travers une interface prévue entre les contrôleurs de réseau radio, sans passer par le coeur de réseau (30).

8. Procédé selon la revendication 7, dans lequel ledit décalage ($\Delta_k$) est représenté sur P bits et ladite référence de temps (SFN) est représentée sur Q bits, lorsqu'on les exprime en nombre de trames, tandis que le numéro de séquence de chiffrement (CSN) est représenté sur M bits, M, P et Q étant des entiers tels que $0 < P < Q < M$.

9. Procédé selon la revendication 8, dans lequel le premier contrôleur (40) émet les données de réglage pendant la phase de relocalisation à un instant où les P bits de poids les plus faibles du numéro de séquence de chiffrement (CSN) sont à zéro.

10. Procédé selon la revendication 5 ou 6, dans lequel les données de réglage transmises pendant la phase d'établissement du premier chemin supplémentaire sont transmises à travers une interface prévue entre les contrôleurs de réseau radio, sans passer par le coeur de réseau, tandis que le reste des données de réglage est transmis pendant la phase de relocalisation par l'intermédiaire du coeur de réseau (30).

11. Procédé selon la revendication 10, dans lequel ledit décalage ($\Delta_k$) et ladite référence de temps (SFN) sont représentés sur Q bits, lorsqu'on les exprime en nombre de trames, tandis que le numéro de séquence de chiffrement (CSN) est représenté sur M bits, M et Q étant des entiers tels que $0<Q<M$.

12. Procédé selon l'une quelconque des revendications 1 à 4, dans lequel les premier et second chemins ont des liens radio respectivement supportés par des ressources d'accès différentes, et dans lequel la procédure de transfert comprend :

- l'envoi des données de réglage du premier contrôleur (60) au second contrôleur (61) une fois que le terminal est à portée radio d'une station de base (71) du second chemin reliée au second contrôleur ;
- une phase d'émission simultanée de signaux radio transportant la même information chiffrée par les stations de base respectives (70, 71) des premier et second chemins ;
- le basculement du terminal (14) du lien radio du premier chemin au lien radio du second chemin ; et
- la suppression du premier chemin, le terminal émettant et recevant l'information chiffrée selon le second chemin.

13. Procédé selon la revendication 12, dans lequel les données de réglage sont transmises du premier contrôleur (60) au second contrôleur (61) par l'intermédiaire du coeur de réseau (30).

14. Procédé selon la revendication 13, dans lequel ledit décalage ($\Delta_k$) et ladite référence de temps (SFN) sont représentés sur Q bits, lorsqu'on les exprime en nombre de trames, tandis que le numéro de séquence de chiffrement (CSN) est représenté sur M bits, M et Q étant des entiers tels que $0 < Q < M$.

15. Procédé selon l'une quelconque des revendications 12 à 14, dans lequel les ressources d'accès différentes des liens radio des premier et second chemins comprennent des fréquences porteuses différentes.

16. Procédé selon l'une quelconque des revendications 12 à 15, dans lequel les premier et second contrôleurs (60, 61) appartiennent à des réseaux d'accès différents.

17. Procédé selon l'une quelconque des revendications 12 à 15, dans lequel les premier et second contrôleurs (60, 61) sont situés à un même noeud de réseau, et comportent des circuits distincts relativement aux premier et second chemins, pour au moins une partie des protocoles de communication incluant les fonctions de chiffrement et de déchiffrement de l'information, lesdits circuits communiquant entre eux de façon asynchrone.

18. Réseau d'accès d'un système cellulaire de radiocommunication, **caractérisé en ce qu'**il comprend des moyens de mise en oeuvre de toutes les étapes d'un procédé selon l'une quelconque des revendications précédentes.

**Claims**

1. Method of controlling a circuit mode communication logical channel between a radio terminal (14) and a cellular radiocommunication infrastructure, the infrastructure comprising at least one core network (30), radio network controllers (40, 41; 60, 61) linked to the core network and comprising first and second controllers, and base stations (50, 51; 70, 71) provided with radio interfaces and each linked to one of the radio network controllers, the method comprising the following steps:

- establishing at least one first communication path between the core network and the terminal, passing through one of the base stations (50; 70) and through the first controller (40; 60) constituting a master controller for said first path;

- transmitting information pertaining to the logical channel along the first communication path;
- establishing at least one second communication path between the core network and the terminal, passing through one of the base stations (51; 71) and through the second controller (41; 61) constituting a master controller for said second path; and
- transmitting information pertaining to the logical channel along the second communication path,

**characterized in that** the information transmitted along each communication path is ciphered in a portion of said path going from the master controller to the radio terminal, the ciphering being performed as a function of parameters comprising a secret key (CK) and a ciphering sequence number (CSN) combined with said key, whereby the master controller and the terminal jointly increment the ciphering sequence number at the rate of frames of determined duration, so as to have the same ciphering parameters to allow deciphering of the information,

and **in that** the second path is established in a transfer procedure which comprises transmitting adjustment data from the first controller to the second controller and suppressing each first path, the adjustment data being representative of a current value of the ciphering sequence number and of an offset between the ciphering sequence number and a time reference available to the second controller.

2. Method according to Claim 1, wherein the second controller (41; 61) processes the adjustment data received from the first controller (40; 60) to align the ciphering sequence number which it increments with that incremented autonomously by the radio terminal (14).

3. Method according to Claim 1 or 2, wherein said offset ($\Delta_k$) is measured by the terminal (14) on the basis of radio signals received from a base station linked to the second controller (41; 61) and carrying information relating to said time reference.

4. Method according to Claim 3, wherein said time reference comprises a frame counter maintained for a base station linked to the second controller (41; 61).

5. Method according to any one of Claims 1 to 4, wherein the transfer procedure comprises:

- a phase of establishing at least one first additional path between the core network (30) and the radio terminal (14), passing through a base station (51) linked to the second controller and through the second controller (41) in addition to the first controller, whereby the first controller constitutes the master controller for said first additional path, during which establishment phase some at least of the adjustment data representative of said offset are transmitted from the first controller to the second controller;

- a macrodiversity phase during which information pertaining to the logical channel is transmitted simultaneously along at least two first communication paths including said first additional path; and
- a relocation phase during which the adjustment data representative of the current value of the ciphering sequence number are transmitted from the first controller to the second controller, after which each first path is replaced by a second path not passing through the first controller (40).

6. Method according to Claim 5, wherein the relocation phase is performed after a phase of suppressing each first path not passing through the second controller (41).

7. Method according to Claim 5 or 6, wherein the adjustment data are transmitted from the first controller (40) to the second controller (41) through an interface provided between the radio network controllers, without passing through the core network (30).

8. Method according to Claim 7, wherein said offset ($\Delta_k$) is represented on P bits and said time reference (SFN) is represented on Q bits, as expressed in terms of number of frames, whilst the ciphering sequence number (CSN) is represented on M bits, M, P and Q being integers such that $0 < P < Q < M$.

9. Method according to Claim 8, wherein the first controller (40) transmits the adjustment data during the relocation phase at an instant at which the P least significant bits of the ciphering sequence number (CSN) are zero.

10. Method according to Claim 5 or 6, wherein the adjustment data transmitted during the phase of establishing the first additional path are transmitted through an interface provided between the radio network controllers, without passing through the core network, whilst the remainder of the adjustment data is transmitted during the relocation phase through the core network (30).

11. Method according to Claim 10, wherein said offset ($\Delta_k$) and said time reference (SFN) are represented on Q bits, as expressed in terms of number of frames, whilst the ciphering sequence number (CSN) is represented on M bits, M and Q being integers such that $0 < Q < M$.

**12.** Method according to any one of Claims 1 to 4, wherein the first and second paths have radio links respectively supported by different access resources, and wherein the transfer procedure comprises:

- sending the adjustment data from the first controller (60) to the second controller (61) once the terminal is within radio range of a base station (71) of the second path, linked to the second controller;
- a phase of simultaneous transmission of radio signals transporting the same information ciphered by the respective base stations (70, 71) of the first and second paths;
- switching over the terminal (14) from the radio link of the first path to the radio link of the second path; and
- suppressing the first path, the terminal transmitting and receiving the ciphered information along the second path.

**13.** Method according to Claim 12, wherein the adjustment data are transmitted from the first controller (60) to the second controller (61) through the core network (30).

**14.** Method according to Claim 13, wherein said offset ($\Delta_k$) and said time reference (SFN) are represented on Q bits, as expressed in terms of number of frames, whilst the ciphering sequence number (CSN) is represented on M bits, M and Q being integers such that $0 < Q < M$.

**15.** Method according to any one of Claims 12 to 14, wherein the different access resources of the radio links of the first and second paths comprise different carrier frequencies.

**16.** Method according to any one of Claims 12 to 15, wherein the first and second controllers (60, 61) belong to different access networks.

**17.** Method according to any one of Claims 12 to 15, wherein the first and second controllers (60, 61) are situated at a common network node, and comprise separate circuits in relation to the first and second paths, for at least some of the communication protocols including the information ciphering and deciphering functions, whereby said circuits communicate with one another asynchronously.

**18.** Access network of a cellular radiocommunication system, **characterized in that** it comprises means for implementing all steps of a method according to any one of the preceding claims.

**Patentansprüche**

**1.** Verfahren zum Steuern/Regeln eines Logikkanals zur Kommunikation im Verbindungsmodus zwischen einem Funkendgerät (14) und einer zellulären Funkkommunikationsinfrastruktur, wobei die Infrastruktur wenigstens einen Netzwerkkern (30), Funknetzsteuer/regeleinrichtungen (40,41; 60,61), die mit dem Netzwerkkern verbunden sind, und erste und zweite Steuer/Regeleinheiten umfassen, sowie Basisstationen. (50, 51; 70,71) umfasst, die mit Funkschnittstellen versehen sind und die jede mit einer der Steuer/Regeleinheiten des Funknetzes verbunden sind, wobei das Verfahren folgende Schritte umfasst:

- Aufbauen wenigstens eines ersten Kommunikationswegs zwischen dem Netzwerkkern und dem Endgerät, welcher über eine der Basisstationen (50;70) und über die erste Steuer/Regeleinheit (40,60) verläuft, die eine Hauptsteuer/Regeieinheit für den ersten Weg bildet;
- Übertragen der vom Logikkanal aufgenommenen Information, die dem ersten Kommunikationsweg folgt;
- Aufbauen wenigstens eines zweiten Kommunikationswegs zwischen dem Netzwerkkern und dem Endgerät, welcher über eine der Basisstationen (51;71) und über die zweite Steuer/Regeleinheit (41,61) verläuft, die eine Hauptsteuer/regeleinheit für den zweiten Weg bildet; und
- Übertragen der vom Logikkanal aufgenommenen Information, die dem zweiten Kommunikationsweg folgt,

**dadurch gekennzeichnet dass**,
die übertragene Information, die jedem Kommunikationsweg folgt, in einem Teil des von der Hauptsteuer/regeleinheit zum Funkendgerät gehenden Wegs chiffriert wird, wobei die Chiffrierung in Abhängigkeit von Parametern so ausgeführt wird, dass sie über die selben Chiffrierparameter verfügt, um das Dechiffrieren der Information zu erlauben, wobei die Parameter einen geheimen Schlüssel (CK) und eine mit dem Schlüssel kombinierte Chiffrierfolgenummer (CSN) umfassen, wobei die Hauptsteuer/regeleinheit und das Endgerät zusammen die Chiffrierfolgenummer im Datenblocktakt mit festgelegter Dauer inkrementieren, und dass der zweite Weg in einem Übertragungsverfahren aufgebaut wird, das die Übertragung von Regelungsdaten von der ersten Steuer/Regeleinheit zur zweiten Steuer/Regeleinheit und die Unterdrückung jeden ersten Wegs umfasst, wobei die Regelungsdaten für einen laufenden Wert der Chiffrierfolgenummer und einen Versatz zwischen der Chiffrierfolgenummer und einer an der zweiten Steuer/Regeleinheit verfügbaren Referenzzeit repräsentativ sind.

2. Verfahren nach Anspruch 1, in dem die zweite Steuer/Regeleinheit (41;61) die von der ersten Steuer/Regeleinheit (40;60) erhaltenen Regelungsdaten verarbeitet, um die Chiffrierfolgenummer abzugleichen, die sie mit der inkrementiert, die in selbständiger Weise durch das Funkendgerät (14) inkrementiert wird.

3. Verfahren nach Anspruch 1 oder 2, in dem der Versatz ($\Delta_k$) vom Endgerät (14) auf Grundlage der empfangenen Funksignale gemessen wird, die aus einer mit der zweiten Steuer/Regeleinheit (41;61) verbundenen Basisstation kommen und die Information bezüglich der Zeitreferenz tragen.

4. Verfahren nach Anspruch 3, in dem die Zeitreferenz einen Datenblockzähler umfasst, der auf Seite eines mit der zweiten Steuer/Regeleinrichtung verbundenen Basisstation ist.

5. Verfahren nach einem der Ansprüche 1 bis 4, in dem der Übertragungsprozess umfasst:

   - eine Aufbauphase wenigstens eines ersten zusätzlichen Wegs zwischen dem Netzwerkkem (30) und dem Funkendgerät (14), welcher über eine mit der zweiten Steuer/Regeleinheit verbundenen Basiseinheit (51) und über die zweite Steuer/Regeleinheit (41) zusätzlich zur ersten Steuer/Regeleinheit verläuft, wobei die erste Steuer/Regeleinheit die Hauptsteuer/regeleinheit für den ersten zusätzlichen Weg bildet, wobei während der Aufbauphase ein Teil wenigstens der den Versatz repräsentierenden Regelungsdaten von der ersten Steuer/Regeleinheit zur zweiten Steuer/Regeleinheit übertragen wird.
   - eine Makrovielfaltphase, während der die vom logischen Kanal kommende Information simultan übertragen wird, die wenigstens zwei ersten Kommunikationswegen einschließlich des ersten zusätzlichen Wegs folgt; und
   - eine Relokalisierungsphase, in der die den laufenden Wert der Chiffrierfolgenummer repräsentierenden Regelungswerte von der ersten Steuer/Regeleinheit zur zweiten Steuer/Regeleinheit übertragen werden, nachdem dann jeder erste Weg durch einen zweiten Weg ersetzt ist, der nicht über die erste Steuer/Regeleinheit (40) verläuft.

6. Verfahren nach Anspruch 5, in dem die Relokalisierungsphase nach einer Unterdrückungsphase jedes ersten Wegs, der nicht über die zweite Steuer/Regeleinheit (41) verläuft, durchgeführt wird.

7. Verfahren nach Anspruch 5 oder 6, in dem die Regelungsdaten von der ersten Steuer/Regeleinheit (40) zur zweiten Steuer/Regeleinheit (41) über eine zwischen den Funknetzsteuer/regeleinheiten vorgesehene Schnittstelle übertragen werden, ohne über den Netzwerkkern (30) zu verlaufen.

8. Verfahren nach Anspruch 7, in dem der Versatz ($\Delta_k$) durch P Bits und die Referenzzeit (SFN) durch Q Bits dargestellt wird, wenn man sie als Datenblockzahl ausdrückt, während die Chiffrierfolgenummer (CSN) durch M Bits dargestellt wird, wobei M, P und Q ganzzahlig sind, so dass $0 < P < Q < M$.

9. Verfahren nach Anspruch 8, in dem die erste Steuer/Regeleinheit (40) die Regelungsdaten während der Relokalisierungsphase zu einem Moment ausgibt, indem die P niederwertigsten Bits der Chiffrierfolgenummer (CSN) Null sind.

10. Verfahren nach Anspruch 5 oder 6, in dem die Regelungsdaten während der Aufbauphase des ersten zusätzlichen Wegs über eine zwischen den Funknetzsteuer/regeleinheiten vorgesehene Schnittstellen übertragen werden, ohne über den Netzwerkkern zu verlaufen, während der Rest der Regelungsdaten während der Relokalisierungsphase vermittels des Netzwerkkerns übertragen wird.

11. Verfahren nach Anspruch 10, in dem der Versatz ($\Delta_k$) und die Referenzzeit (SFN) durch Q-Bits dargestellt werden, wenn man sie als Datenblockzahl ausdrückt, während die Chiffrierfolgenummer (CSN) durch M Bits dargestellt wird, wobei M und Q ganzzahlig sind, so dass $0 < Q < M$.

12. Verfahren nach einem der Ansprüche 1 bis 4, in dem der erste und zweite Weg entsprechende Funkbänder aufweisen, die durch verschiedene Zugangsquellen gestützt werden, und im dem das Übertragungsverfahren umfasst:

   - das Senden der Regelungsdaten der ersten Steuer/Regeleinheit (60) zur zweiten Steuer/Regeleinheit (61), sobald das Endgerät im Funkbereich einer Basisstation (71) des zweiten mit der zweiten Steuer/Regeleinheit verbundenen Wegs ist;
   - eine gleichzeitige Funksignalabsendephase, die die selbe durch die entsprechenden Basisstationen (70, 71) des ersten und zweiten Wegs chiffrierte Information überträgt;
   - das Schwenken des Endgeräts (14) des Funkbandes des ersten Wegs auf das Funkband des zweiten Wegs; und

- die Unterdrückung des ersten Wegs, wobei das Endgerät chiffrierte Information gemäß dem zweiten Weg sendet und empfängt.

13. Verfahren nach Anspruch 12, in dem die Regelungsdaten vermittels des Netzwerkkerns (30) von der ersten Steuer/Regeleinheit (60) zur zweiten Steuer/Regeleinheit (61) übertragen werden.

14. Verfahren nach Anspruch 13, in dem der Versatz ($\Delta_k$) und die Referenzzeit (SFN) durch Q-Bits dargestellt werden, wenn man sie als Datenblockzahl ausdrückt, während die Chiffrierfolgenummer (CSN) durch M Bits dargestellt wird, wobei M und Q ganzzahlig sind, so dass $0 < Q < M$.

15. Verfahren nach einem der Ansprüche 12 bis 14, in dem die unterschiedlichen Zugangsquellen der Funkbänder des ersten und zweiten Wegs verschiedene Trägerfrequenzen umfassen.

16. Verfahren nach einem der Ansprüche 12 bis 15, in dem die ersten und zweite Steuer/Regeleinheit (60, 61) zu unterschiedlichen Netzzugängen gehören.

17. Verfahren nach einem der Ansprüche 12 bis 15, in dem sich die erste und zweite Steuer/Regeleinheit (60, 61) in demselben Netzknoten liegen und verschiedene Schaltungen bezüglich des ersten und zweiten Wegs für wenigstens einen Teil der Kommunikationsprotokolle einschließlich der Chiffrier- und Dechiffrierfunktionen der Information umfassen, wobei die Schaltungen auf asynchrone Weise miteinander kommunizieren.

18. Zugangsnetz einer zellulären Funkkommunikation, **dadurch gekennzeichnet, dass** es Mittel zur Durchführung aller Schritte eines Verfahrens gemäß einem der vorhergehenden Ansprüche umfasst.

FIG.1.

RÉSEAU FIXE

11

COMMUTATEUR UMTS  10

COMMUTATEUR UMTS  10

Iu

Iu

Iu

12

RNC

Iur

RNC

Iur

RNC

12

12

Iub

Iub

Iub

13

BS  BS  BS  BS  BS  BS  BS  BS

13

13

13

14

14a

14b

EP 1 158 828 B1

FIG.2.

COUCHE 3

COUCHE 2

COUCHE 1

15A

RRC

15B

RRC

16A

RLC

16B

RLC

17A

MAC

17B

MAC

18A

CODAGE/MULTIPLEXAGE

18B

CODAGE/MULTIPLEXAGE

19A

RADIO

19B

RADIO

Uu

UTRAN

UE

EP 1 158 828 B1

FIG.3.

FIG.4.

FIG.11.

FIG.5.

FIG.6.

FIG.7.

FIG.8.

FIG.9.

100 — DÉCISION DE RELOCALISATION

101 — CSNE ← CSN

102 — ÉMETTRE MESSAGE AVEC CSNE ($\Delta_k$)

OUI — ACK REÇU ? — NON

103

104

SUPPRIMER INSTANCE MAC

FIG.10.

110 — RÉCEPTION MESSAGE

111 — LIRE CSNE

112 —
$$TE_k \leftarrow (CSNE + \delta) \bmod 2^k$$
$$TR_k \leftarrow (SFN + \Delta_k) \bmod 2^k$$

113 —
M−k MSB DE $CSN_0$ ← M−k MSB DE CSNE
k LSB DE $CSN_0$ ← $TR_k$

OUI — $TR_k < TE_k$ ? — NON

114

115
$$CSN_0 \leftarrow (CSN_0 + 2^k) \bmod 2^M$$

116 — DÉMARRER INSTANCE MAC

117 — RENVOYER ACK

FIG.12.

FIG.13.

FIG.14.